# EUROPEAN PATENT APPLICATION

(11) **EP 4 492 417 A1**
(43) Date of publication of application: **15.01.2025**
(21) Application number: 23306177.9
(22) Date of filing: 10.07.2023
(51) Int. Cl.: H01G 11/34, C01B 32/318, H01G 11/44, H01G 11/86

(54) **PROCESS FOR THE PREPARATION OF A POROUS MONOLITHIC CARBONACEOUS MATERIAL, THE POROUS MONOLITHIC CARBONACEOUS MATERIAL OBTAINED BY SAID PROCESS, AND ITS USE AS SUPERCAPACITOR ELECTRODE**

(71) Applicant: UNIVERSITE DE BORDEAUX, 33000 Bordeaux (FR); Institut Polytechnique de Bordeaux, 33400 Talence (FR); Centre National de la Recherche Scientifique, 75016 Paris (FR)
(72) Inventor: BACKOV, Rénal, 33200 Bordeaux (FR); DELEUZE, Hervé, 33125 Saint-Magne (FR); OLCHOWKA, Jacob, 33140 Villenave d'Ornon (FR); GUERLOU-DEMOURGUES, LILIANE, 33600 Pessac (FR); DOURGES, Marie-Anne, 33400 Talence (FR); POUPART, Romain, 33800 Bordeaux (FR); INVERNIZZI, Ronan, 33140 Villenave d'Ornon (FR)
(74) Representative: IPAZ

(57) **Abstract**

The present invention relates to a process for the preparation of a porous monolithic carbonaceous material which combines high specific surface area and good electronic transport properties, a porous monolithic carbonaceous material obtained according to said process, its uses as an electrode in an electrochemical device such as a supercapacitor, an electrode comprising said porous monolithic carbonaceous material, and a supercapacitor comprising said electrode.

## Description

The present invention relates to a process for the preparation of a porous monolithic carbonaceous material which combines high specific surface area and good electronic transport properties, a porous monolithic carbonaceous material obtained according to said process, its uses as an electrode in an electrochemical device such as a supercapacitor, an electrode comprising said porous monolithic carbonaceous material, and a supercapacitor comprising said electrode.

Supercapacitors are a type of electrical energy storage devices where the electrical charge is stored at the electrode/electrolyte interface. These devices have very large electrode surface area, which leads to an increase in the capacitance per unit of area. Compared to other available energy storage devices such as batteries and conventional capacitors, supercapacitors represent an advantageous alternative energy storage device that can fill the gap with regards to fast power delivery or harvesting. Supercapacitors are successfully involved in the transportation field such in electric cars, buses and electric trains. A typical structure of symmetric supercapacitor comprises two identical capacitive electrodes (carbon electrodes having very high specific surfaces, generally between 1000 and 2000 m².g⁻¹) deposited on metal current collectors, between which a porous separator ensures electronic insulation. The assembly is immersed in an electrolyte. The difference in potential of such an uncharged cell is 0 V and it increases linearly with time during the galvanostatic charging of the direct current cell. During the charging, the potential of the positive electrode increases linearly and the potential of the negative electrode decreases linearly.

The most commonly used materials for supercapacitors' electrodes are based on carbon. Over the last few decades, several carbon allotropic forms have been investigated as functional material for supercapacitor such as carbon nanotubes, graphenes, or activated carbons. Activated carbons are the most commonly used materials for shaping supercapacitor electrodes. They are generally produced from wood, coal or lignocellulosic waste, by heat treatment accompanied by either physical activation (second heat treatment) or chemical activation (chemical impregnation). The electrodes are typically shaped by mixing activated carbon powder with a binder, polytetrafluoroethylene (PTFE) in a solvent. After drying, the electrode is obtained. Nevertheless, to be industrially implementable, functional carbon-based-materials need of being both abundant and cheap.

Some studies have been reported on porous carbon monoliths obtained from mesoporous macrocellular silica foams. Briefly, it consists of creating a three-dimensional structure around a particle, a molecule or even a liquid, which is finally removed to reveal the porosity of the material. This technique allows the size and structure of the pores to be controlled, unlike the materials described above. In particular, mesoporous macrocellular silica foams, labeled Si(HIPE), are first prepared by using emulsions as macroscopic moulds and lyotropic mesophases as mesoscopic templates. The HIPE acronym refers to high-internal-phase-emulsion process. Then, soaking of these Si(HIPE) foams with a phenolic resin followed by carbonization and removal of the silica template allows to obtain partially graphitized interconnected porous carbon monoliths. Like the silica templates, these carbons possess a hierarchical porosity. These materials can find applications as electrochemical capacitor and Li-ion battery negative electrodes as disclosed in Brun et al. [J. Phys. Chem. C, 2012, 116, 1408-1421]. In particular, the porous carbon monolith can be used "as such" as an electrode, i.e. without going through an additional manufacturing stage unlike activated carbons, graphenes and carbon nanotubes. The main drawbacks of this process lie in its complexity and in the use of toxic and non renewable reagents. In particular, such process involves the use of sacrificial harmful chemicals and of materials mainly of petroleum origin or of synthetic origin, i.e. from non-plant and non-renewable raw materials. Additionally, the described carbon monoliths exhibit poor electrochemical capacitance (around 20 F.g⁻¹).

Thus, the aim of the present invention is to overcome the drawbacks of the prior art, and more particularly, to provide a simple and economical process to provide a porous carbon material which displays improved performances as an electrode in electrochemical devices, said process being implemented with abundant and/or cheap raw materials and/or renewable raw materials; and limiting or at least reducing the use of toxic reagents. In particular there is a need to promote a sustainable development approach by valorizing industrial waste, without a negative impact on other priority uses of such resources, such as human or animal food, and without additional environmental impact.

### The process

A first object of the present invention is a process for preparing a porous monolithic carbonaceous material, wherein said process comprises at least the following steps:
i) preparing an hydrophilic alkaline phase comprising at least one polymerizable monomer, oligomer, or prepolymer from industrial lignin, at least one surfactant, and at least one crosslinking agent,
ii) contacting and mixing said hydrophilic alkaline phase with an hydrophobic oily phase comprising at least one organic solvent or at least one oil, so as to form an emulsion,
iii) polymerizing the emulsion so as to form a solid,
iv) carbonizing the solid by submitting the solid obtained in step iii) to a heating step from an initial temperature Tᵢ to a final temperature Tf,
   wherein the initial temperature Tᵢ ranges from 15°C to 30°C, the final temperature Tf is greater than or equal to 850°C, and said heating step is characterized by:
   * a heating rate greater than 1°C/min,
   * a first plateau at a temperature T_{P1} ranging from 250 to 350°C,
   * a second plateau at a temperature T_{P2} ranging from 550 to 750°C, and
   * a third plateau at the final temperature Tf,
   wherein each plateau is carried out during less than 120 min, and
v) washing the carbonized solid.

The inventors have found that thanks to a specific heat treatment, a porous carbon material which displays improved performances as an electrode in electrochemical devices is obtained. In particular, the porous carbon material has pore size, shape and chemical composition which offer simultaneously high surface area and good electronic transport properties, leading to good electrochemical performances, specifically in terms of capacitance and cyclability. Moreover, the process is simple, economical and implements a polymerizable precursor which is a renewable material.

The process of the invention implements the polymerization of a highly concentrated emulsion.

### Step i)

The hydrophilic alkaline phase corresponds to an external dispersion phase and represents the continuous phase.

Step i) is preferably carried out at room temperature.

The polymerizable monomer, oligomer, or prepolymer from industrial lignin.

In the present invention, the term "polymerizable monomer, oligomer, or prepolymer from industrial lignin" means a polymerizable monomer, oligomer, or prepolymer which originates from the industrial lignins.

Indeed, the polymerizable monomer, oligomer, or prepolymer used in the hydrophilic alkaline phase originates from lignocellulosic biomass.

Lignocellulosic biomass represents one of the most abundant renewable resources on earth. In general terms, lignin results from the oxidative polymerization of at least three types of phenolic alcohols: p-coumarylic alcohol, coniferylic alcohol and sinapylic alcohol. Its structure depends on the botanic origin, the age of the plant, the type of tissue, cells and parietal layers in which it is found. This high level of natural variation, combined with the variations arising from the methods of analysis makes presentation of the structure of the lignins difficult.

Thus, the term "lignin" is a generic name which designates a group of polyphenolic polymers having a high molecular mass, of variable and complex composition and structure.

In the chemical methods for the manufacture of paper pulp, the lignins are separated from the cellulose by chemical methods which significantly modify their structure. The residual lignins, then called "industrial lignins", are present in dissolved form in cooking liquors which can also comprise hemicellulose monomers. These cooking liquors are either strongly basic in the Kraft process. The industrial lignins can be extracted and constitute a byproduct representing a significant quantity of waste of more than 50,000 tonnes annually worldwide.

Several types of industrial lignin are available and can be used in the context of the invention as a raw material so as to provide the polymerizable monomer, oligomer or prepolymer, and preferably Kraft lignin which originates from the paper-making process of the same name and represents more than 80% of paper production worldwide.

Kraft lignin is one of the main by-products of the paper industry, currently available in very large quantities and valorized to a very small extent, as "black liquor". Black liquor, also known as Kraft black liquor, is the cooking liquor originating from the manufacture of paper according to the Kraft process. It is presented in the form of a highly basic aqueous solution composed mainly of Kraft lignin residues and hemicellulose dissolved from paper pulp, as well as other inorganic chemical compounds used in the dissolution method.

In one embodiment, the polymerizable monomer, oligomer or prepolymer from industrial lignin is provided in the hydrophilic alkaline phase as a solution comprising said polymerizable monomer, oligomer or prepolymer from industrial lignin. In that embodiment, the solution comprising said polymerizable monomer, oligomer or prepolymer from industrial lignin is preferably a cooking liquor, and more preferably a black liquor.

In fact, Kraft lignin is the main constituent of the black liquor, which allows its preferred use as the main constituent of the hydrophilic alkaline phase, and this without prior modification.

In the case where the solution is a cooking liquor, in particular the black liquor, the solution further comprises a solvent which originates from this liquor.

The solvent can be selected from polar solvents such as water, C₁-C₅ alcohols, DMSO, or THF, and preferably water. In other words, the solution comprising the polymerizable monomer, oligomer, or prepolymer is preferably an aqueous solution.

The black liquor may contain from approximately 20% to approximately 80% by mass of dry matter, preferably from approximately 40% to approximately 60% by mass of dry matter.

The hydrophilic alkaline phase preferably comprises from 40 to 60% by weight of said solution comprising said polymerizable monomer, oligomer, or prepolymer and more preferably from 50 to 60% by weight of said solution comprising said polymerizable monomer, oligomer or prepolymer, with respect to the total weight of the hydrophilic alkaline phase.

The hydrophilic alkaline phase has preferably a pH ranging from 12 to 14, and more preferably from 13 to 14.

The solution comprising said polymerizable monomer, oligomer or prepolymer from industrial lignin (cooking liquor such as black liquor) has preferably a density ranging from 1.2 to 1.4 g/cm³.

In a particular embodiment, step i) is carried such that the solution comprising the polymerizable monomer, oligomer, or prepolymer and the surfactant are mixed together until total dissolution of the surfactant so as to form a resulting composition, and the crosslinking agent is added to the resulting composition, preferably dropwise added to said resulting composition so as to form the hydrophlic alkaline phase. Additional mixing can be carried out so as to favor formation of an homogenous hydrophilic alkaline phase.

### The surfactant

In order to form a stable oil-in-water emulsion in step ii), a surfactant having a highly hydrophilic character is added in the hydrophilic alkaline phase.

The surfactant can thus be chosen from anionic surfactants and non-ionic surfactants. Indeed, cationic surfactants can precipitate.

Anionic surfactant can comprise a hydrophilic head selected from a carboxylate, sulfate and sulfonate group, and an apolar part selected from a linear alkyl chain, a branched alkyl chain, said alkyl chain being optionally functionnalized, a linear alkylbenzene chain, and a branched alkylbenzene chain.

In one preferred embodiment, the anionic surfactant is selected from sodium dodecyl sulfate (SDS), sodium dodecyl sulfonate, dioctyl sodium sulfasuccinate (AOT), triethanolamine stearate, sodium lauryl sulfate and triethanolamine lauryl sulfate, and more preferably is SDS.

Non-ionic surfactants can be selected from alkyl polyethoxylates, ethoxylated alkylphenols, polymer complexes of polyethylene oxide and polypropylene oxide, polyethylene oxide octylphenols, polyethylene oxide nonylphenols, polyethylene oxide and polypropylene oxide block copolymers (also called ethylene glycol and propylene glycol block copolymers), sorbitan fatty acid monoesters and polyesters, glycerol fatty acids monoesters and polyesters, and mixtures thereof.

Examples of ethylene glycol and propylene glycol block copolymers are the ones sold, for example, under the trade names Pluronic^{®} P123, Pluronic^{®} P108, and Pluronic^{®} F127 by BASF.

The hydrophilic alkaline phase preferably comprises from 1 to 10% by weight of said surfactant, and more preferably from 3 to 5% by weight of said surfactant, with respect to the total weight of the hydrophilic alkaline phase.

### The crosslinking agent

The hydrophilic alkaline phase comprises a crosslinking agent.

Said crosslinking agent is preferably selected from epichlorhydrin and cyanuryl chloride.

The hydrophilic alkaline phase preferably comprises from 5 to 15% by weight of said crosslinking agent, and more preferably from 7 to 12% by weight of said crosslinking agent, with respect to the total weight of the hydrophilic alkaline phase.

The polymerizable monomer(s), oligomer(s), or prepolymer(s) contained in the hydrophilic alkaline phase are crosslinked thanks to the crosslinking agent in order to obtain a rigid solid. Crosslinking allows the creation of covalent bonds between the polymer chains using the reactive chemical functions present on the lignin chains (aliphatic alcohols and phenols) as well as on the hemicellulose chains which are optionally present (aliphatic alcohols only), in an aqueous basic medium and at a moderate temperature. Under these conditions, the preferred cross-linking agent is epichlorhydrin. The reaction of epichlorhydrin with the Kraft lignin of the black liquor has the advantage of being catalyzed in a highly basic medium at a moderate temperature of 60°C.

In one particularly preferred embodiment, the hydrophilic alkaline phase is an hydrophilic alkaline aqueous phase.

### Step ii)

The hydrophobic oily phase corresponds to an internal dispersed phase.

The emulsion obtained in step ii) is of "oil-in-water" type i.e. having an aqueous phase for hydrophilic aqueous phase or external dispersion phase and an organic phase for internal dispersed phase or hydrophobic oily phase.

The hydrophobic oily phase comprises an organic solvent or an oil, and preferably an organic solvent.

The hydrophobic oily phase is preferably constituted of an organic solvent or an oil, and more preferably of an organic solvent.

The organic solvent (respectively the oil) has preferably a density close to the one of the solution comprising the polymerizable monomer, oligomer, or prepolymer or of the hydrophilic alkaline phase, such as a density greater than 1.0 g/cm³, and more preferably ranging from 1.2 to 1.4 g/cm³. This enables formation of a stable emulsion.

In order to provide an emulsion during the contacting and mixing step ii), the hydrophobic oily phase is immiscible with the hydrophilic alkaline phase or with at least one component of said hydrophilic alkaline phase.

The organic solvent can be selected from linear or branched alkanes, preferably linear or branched halogenated alkanes such as 1,2-dichloroethane.

The oil can be selected from natural oils such as castor oil, or turpentine oil.

The oil can have a melting point ranging from approximately 10° C and approximately 40° C, and preferably close to ambient temperature.

An organic solvent, in particular 1,2-dichloroethane is preferred.

The contacting and mixing step ii) is preferably such that a volume Vₒ of the hydrophobic oily phase is contacted and mixed with a volume Vₐ of the hydrophilic alkaline phase so as to form an emulsion having a volume Vₑ = Vₐ + Vₒ, with Vₒ being greater than Vₐ.

In particular, Vₒ/Vₑ ≥ 0,51, preferably Vₒ/Vₑ ≥ 0,55.

In one embodiment, Vₒ/Vₑ ≤ 0,70, preferably Vₒ/Vₑ ≤ 0.65.

Step ii) is preferably performed at room temperature (i.e. 18-25°C).

Step ii) is preferably performed during 70 to 90 min.

Step ii) is preferably carried out with a double syringe system.

This emulsion is preferably monodisperse.

### Step iii)

The polymerizing step iii) enables reaction of the crosslinking agent with the polymerizable monomer(s), oligomer(s), or prepolymer(s) from industrial lignin.

Step iii) can be conducted at a temperature below 100°C, and preferably at a temperature ranging from approximately 40°C to approximately 80°C. The polymerizing step iii) enables formation of a solid which can then be carbonized.

Step iii) is preferably performed during 24 to 28 h.

Before step iii), the process can comprise a step ii') of placing the emulsion of step ii) in a container such as a mould, preferably a closed container. Then, the container is heated at a temperature as defined above as the polymerizing step iii).

The process can further comprise a washing step iii-1), for example by washing the solid obtained in step iii) with a solvent such as a C₁-C₅ alcohol, or diethyl ether, in particular by means of a soxhlet apparatus.

The washing step can be followed by a drying step iii-2) at a temperature below 100°C, and preferably at a temperature ranging from approximately 50°C to approximately 90°C, preferably under vacuum.

### Step iv)

Step iv) is a carbonization step where the solid is submitted to a heating step from an initial temperature Tᵢ to a final temperature Tf,
wherein the initial temperature Tᵢ ranges from 15°C to 30°C, the final temperature Tf is greater than or equal to 850°C, and said heating step is characterized by:
   * a heating rate greater than 1°C/min,
   * a first plateau at a temperature T_{P1} ranging from 250 to 350°C,
   * a second plateau at a temperature T_{P2} ranging from 550 to 750°C, and
   * a third plateau at the final temperature Tf,
wherein each plateau is carried out during less than 120 min.

In one preferred embodiment, the final temperature Tf ranges from 850°C to 1700°C, more preferably from 860°C to 1400°C, more preferably from 875°C to 1200°C, and even more preferably from 875°C to 1000°C.

The heating step iv) can have a heating rate greater than 2°C/min, preferably ranging from 3°C/min to 10°C/min, and more preferably greater ranging from 4°C/min to 7°C/min.

The first plateau has preferably a temperature T_{P1} ranging from 275 to 325°C.

The second plateau has preferably a temperature T_{P2} ranging from 575 to 700°C, and more preferably ranging from 575 to 675°C.

Each plateau is preferably carried out during less than or equal to 100 min, more preferably during 30 min to 90 min, and even more preferably during 45 min to 75 min.

Step iv) is generally carried out under an inert atmosphere such as argon, or nitrogen (when the temperature is less than or equal to 1200°C and preferably less than or equal to 1000°C).

Step iv) is preferably performed at a flow rate of inert atmosphere ranging from 0.05 l/min to 0.5 l/min.

Step iv) can be followed by an uncontrolled cooling step to room temperature of the carbonized solid.

### Step v)

Once the solid is carbonized (and cooled), it is subjected to a washing step.

The washing step enables removing the residual salts.

The washing step i) can be performed with at least one solvent selected from water.

The porous monolithic carbonaceous material obtained from the process

High graphitization (which promotes good electronic transport properties) is known to involve low specific surface area and *vice versa.* However, thanks to the process of the present invention, and more particularly step iv) of carbonization, a compromise is found between high surface area and good electronic properties and a porous monolithic carbonaceous material is obtained with high specific surface area as well as appropriate graphitization.

The porous monolithic carbonaceous material is a monolith.

In the present invention, the term "monolith" means a solid object having a mean dimension of at least 1 mm, and preferably at least 3 mm.

The porous monolithic carbonaceous material is a porous material. The porosity originates from the fingerprint of the internal dispersed phase or also from the elimination of the water optionally contained in the external dispersion phase.

In particular, the porous monolithic carbonaceous material obtained according to the process of the invention is an essentially microporous material comprising micropores, mesopores and optionally macropores.

In the present invention, the term "essentially microporous" means nitrogen sorption isotherms of type I or mixture of types I and IV.

The porous monolithic carbonaceous material obtained according to the process of the invention comprises a mesoporous/microporous hierarchical structure. In other words, the porous monolithic carbonaceous material has a cellular structure exhibiting at least a double porosity.

In the present invention, the term "micropores" is understood to mean pores having a size of less than 2 nm.

In one particularly preferred embodiment, the micropores of the porous monolithic carbonaceous material have a size ranging from 0.1 to less than 2 nm.

In the present invention, the term "mesopores" is understood to mean pores having a size varying from 2 to 50 nm.

In one particularly preferred embodiment, the mesopores of the porous monolithic carbonaceous material have a size ranging from 2.0 to 10.0 nm, and more preferably from 2.0 to 5.0 nm.

In one preferred embodiment, the porous monolithic carbonaceous material comprises interconnected micropores and mesopores. In other words, micropores are interconnected to each other, mesopores are interconnected to each other and micropores are interconnected to mesopores.

Mesoporosity and microporosity can be quantified and segregated by a nitrogen adsorption-desorption technique using the BET calculation method (Brunauer, Emmett and Teller model or BET method) which globalises mesoporosity and microporosity (S. Brunauer, P. H. Emmet, E. Teller, Journal of the American Chemical Society, 1938, 60, 2, 309-319); and by the B.J.H calculation method (Barrett, Joyner and Halenda, Journal of the American Chemical Society, 1951, 73, 373-380), according to which segregation between microporosity and mesoporosity becomes effective, the BJH method only considering pores greater than 1.5 angstroms.

The porous monolithic carbonaceous material can further comprise macropores.

In the present invention, the term "macropores" is understood to mean pores having a size greater than 50 nm.

In one particularly preferred embodiment, the macropores of the porous monolithic carbonaceous material have a size ranging from 0.2 µm to 200 µm.

Macropores can be identified by scanning electron microscopy (SEM) and/or by mercury intrusion measurements.

The porous monolithic carbonaceous material comprises advantageously amorphous carbonaceous backbone associated with randomly dispersed graphitized domains. The graphitized domains confer the electronic transport properties to said material.

In one particularly preferred embodiment, the porous monolithic carbonaceous material displays a disorder paramater *I_{D}*/(*I_{D}*+*I_{G}*)*,* with *I_{D}* being the intensity of the D-band and *I_{G}* being the intensity of the G-band respectively, less than or equal to 50.0%, preferably from 48.0% to 49.5%, and more preferably from 48.5% to 49.0%, where the intensities of the G-band and the D-band are measured on a Raman spectrum and the D-band corresponds to a first main band centred at 1337 cm⁻¹, and the G-band corresponds to a second main band centred at 1584 cm⁻¹.

The D-band corresponds to disordered sp² carbon, and the G-band corresponds to two dimensional in-plane motion of strongly coupled sp² carbons *(i.e.* E_{2g} symmetry) in the honeycomb network of graphite lattice.

The width of the G-band and D-band can give information on graphitization.

Thanks to the specific heat treatment carried out in step iv), the porous monolithic carbonaceous material has enough graphitized domains so as to display good electrochemical performances.

In one preferred embodiment, the porous monolithic carbonaceous material displays an electrical conductivity ranging from 20 to 40 S.m⁻¹, and more preferably from 25 to 35 S.m⁻¹.

In a particularly embodiment, the porous monolithic carbonaceous material is a self-standing material (self-supported material). Thus, it does not require a support and it can be directly used as an electrode in an electrochemical device.

In one preferred embodiment, the porous monolithic carbonaceous material has a specific surface area ranging from 1200 to 1900 m²/g, and more preferably from 1350 to 1750 m²/g.

Measurement of the specific surface area can be carried out by nitrogen adsorption and processing the data by the BET method (Brunauer-Emmet-Teller).

In one preferred embodiment, the porous monolithic carbonaceous material has an apparent skeletal density ranging from 0.5 to 0.8 g.ml⁻¹, said apparent skeletal density being measured by mercury intrusion porosimetry.

In one preferred embodiment, the porous monolithic carbonaceous material has a porosity ranging from 60% to 80%, said porosity being measured by mercury intrusion porosimetry.

### The porous monolithic carbonaceous material

A second object of the present invention is a porous monolithic carbonaceous material, wherein said porous monolithic carbonaceous material is obtained according to a process as defined in the first object of the present invention, it is an essentially microporous material comprising micropores, mesopores and optionally macropores, and it displays a disorder paramater *I_{D}*/(*I_{D}*+*I_{G}*)*,* with *I_{D}* being the intensity of the D-band and *I_{G}* being the intensity of the G-band respectively, less than or equal to 50.0%, preferably from 48.0% to 49.5%, and more preferably from 48.5% to 49.0%, where the intensities of the G-band and the D-band are measured on a Raman spectrum and the D-band corresponds to a first main band centred at 1337 cm⁻¹, and the G-band corresponds to a second main band centred at 1584 cm⁻¹.

The porous monolithic carbonaceous material is as defined in the first object of the present invention.

A third object of the present invention is the use of a porous monolithic carbonaceous material as defined in the second object of the present invention or obtained according to a process as defined in the first object of the present invention as an electrode of an electrochemical device such as a supercapacitor.

Thanks to its porous structure and its content of graphitized domains, the porous monolithic carbonaceous material can be used directly as an electrode or as an electrode active material in an electrode of an electrochemical device such as a supercapacitor.

Said porous monolithic carbonaceous material can display high capacities of - 140 F/g at 1 A/g, matching the ones obtained from a commercial carbon reference (Kuraray YP80F), and exceptional stability of said capacities over a great number of cycles (e.g. 5000 cycles).

A fourth object of the present invention is an electrode for use in an electrochemical device, preferably a supercapacitor, wherein it comprises a porous monolithic carbonaceous material as defined in the second object of the present invention or obtained according to a process as defined in the first object of the present invention.

In one preferred embodiment, the electrode further comprises an agent generating electron conductivity, preferably selected from carbon black, carbon sp, acetylene black, carbon fibres and nanofibres, carbon nanotubes, graphene, graphite, metallic particles and fibres, and one of the mixtures thereof.

The electrode can comprise from approximately 2.5 to 40% by weight of agent generating electron conductivity, and preferably approximately 5 to 30% by weight of agent generating electron conductivity, with respect to the total weight of the electrode.

The agent generating electron conductivity is preferably carbon black.

The electrode can further comprise a polymer binder.

According to a particular embodiment, the electrode comprises from approximately 1 to 15% by weight of polymer binder, and preferably approximately 2.5 to 10% by weight of polymer binder, with respect to the total weight of the electrode.

The polymer binder can be a material selected from ethylene homopolymers and copolymers; propylene homopolymers and copolymers; ethylene oxide homopolymers and copolymers (e.g. PEO, PEO copolymer), methylene oxide, propylene oxide, epichlorohydrin, allyl glycidyl ether, and mixtures thereof; halogenated polymers such as vinyl chloride, vinylidene fluoride, vinylidene chloride, tetrafluoroethylene, ethylene tetrafluoride, or chlorotrifluoroethylene homopolymers and copolymers, vinylidene fluoride and hexafluoropropylene copolymers (PVdF-co-HFP) or mixtures thereof; conducting polymers such as PEDOT:PSS; cellulose-based polymers; and one of the mixtures thereof.

Halogenated polymers are preferred.

A fifth object of the present invention is a supercapacitor comprising a first electrode and a second electrode, said first and second electrodes being separated from each other by means of a separator impregnated with a liquid electrolyte comprising at least one alkaline salt in solution in at least one solvent, wherein at least one of the first and second electrodes is an electrode as defined in the fourth object of the invention.

The electrolyte is preferably an aqueous alkaline electrolyte, more preferably comprising a alkaline salt in water such as KOH, NaOH, LiOH, LiCl, NaCl, KCI, Li₂SO₄, Na₂SO₄, or K₂SO₄.

The present invention is illustrated in more detail in the examples below, but it is not limited to said examples.

### EXAMPLES

The starting materials used in the examples which follow are list below:
* Kraft Black Liquor (KBL), average residual dry mass of around 45%, Smurfit Kappa Cellulose du Pin;
* (±)-Epichlorhydrin, purity ≥ 99%, Sigma-Aldrich/Merck;
* Pluronic^{®} F-108, Sigma-Aldrich/Merck;
* 1,2-dichloroethane (DCE), purity ≥ 99.0%, Sigma-Aldrich/Merck;
* Poly(tetrafluoroethylene) (PTFE): powder having a particle size > 40 µm, Sigma-Aldrich/Merck;
* Isopropanol, purity ≥98%, VWR;
* Diethyl ether, purity ≥ 99.7%), VWR;
* Carbon black acetylene, 100% compressed, Alfa Aesar.

All reagents have been used without further purifications.

The as-received Kraft black liquor comes as a viscous black liquid. Its major physico-chemical properties are the followings: dynamic viscosity µ = 7000 mPa.s at 23°C; pH = 14; density ρ = 1.3 g.ml⁻¹; dry matter amount ≈ 50 wt.%. Phenol group content and total hydroxyl group content of black liquor are 0.5 mmol.g⁻¹ and 0.8 mmol.g⁻¹, respectively.

### Instrumentation

SEM have been performed on a Hitachi TM-1000 apparatus (Hitachi High-Technologies Corp., Tokyo, Japan). A sample has been coated with a thin Pt-metal layer prior to analysis. Photographs were taken at several different magnifications between × 500 and × 10,000. Samples (section of about 0.5 cm²) were mounted on a carbon tab that ensured a good conductivity.

Sample's macroporosity have been investigated by Mercury Intrusion Porosimetry (MIP) using an Autopore IV 9500 porosimeter (Micromeritics) with the following parameters: contact angle = 130°, Hg surface tension = 485 mN·m⁻¹ and maximum intrusion pressure fixed at 124 MPa. The determination of the pore size distributions porosity features was based on the Washburn equation between the applied pressure and the pore size into which mercury intruded.

Raman spectra were recorded in backscattering geometry using a Labram HR (Horiba Group, France) micro spectrometer equipped with a confocal microscope. The experiments were carried out by exciting the samples at the 514.5 nm (2.41 eV) wavelength of an Ar ion laser. The spectral resolution was equal to 6 cm⁻¹ with a confocal hole aperture of 150 µm and a 600 grooves/mm diffraction grating. The laser was focused on the sample by means of a 50× objective (0.75 numerical aperture). The beam power at the sample was around 200 µW to avoid overheating effects due to laser irradiation. Spectra were recorded with an acquisition time of 60 s and 4 accumulations. Hand-made baseline corrections of the spectra were carried out by means of the LabSpec 5 software before deconvolutions. Deconvolutions have been performed using either a simple 2-points fits for the 500 - 2000 cm⁻¹ (D & G) and a 4-points fit for the 2500 - 3250 cm⁻¹, corresponding to the S1-, S2-, S3-& S4-bands.

Specific surface area was determined by recording nitrogen sorption isotherms (77K) with a 3Flex gas sorption analyzer (Micromeritics) after degassing the sample at 250°C under vacuum. The specific surface areas were calculated using the Brunauer, Emmett, and Teller (BET) method from a limited range of pressure in the adsorption curves.

X-ray diffraction has been performed for the sample and was recorded on a Philips PANalytical X'Pert Pro equipped with a copper source (λ_{Kα1} = 0.1540 nm and λ_{Kα2} = 0.1544 nm). The powder was recorded for about 2 h on the angular range 10-80 ° (2θ), with a 0.02 ° (2θ) step size and a 2.022 ° (2θ) active width in the detector.

Electrical conductivities have been measured by extraction from resistivity (σ = 1/R ^{∗} L/S) which is measured using a laboratory-made resistivity experimental device.

### Example 1: preparation of a porous monolithic carbonaceous material according to a process as defined in the first object of the invention

### Step i)

20 g of KBL and 0.9 g of Pluronic^{®} F-108 have been gently mixed (100 rpm) together at room temperature until total dissolution of the non-ionic surfactant Pluronic^{®} F-108. Following this, 2.2 g epichlorhydrin was added dropwise and mixed for 10 minutes so as to prepare a hydrophilic alkaline phase.

### Step ii)

Direct emulsification has been obtained using a laboratory-made homogenizer system composed of two polyethylene syringes (60 ml, internal diameter of 29.2 mm) connected using a small section Nylon tube (ID = 11 mm; OD = 4 mm; length = 15 mm). The as-prepared hydrophilic alkaline phase (20 ml) has been inserted into one of the syringe, while a hydrophobic oily phase composed of 1,2-dichloroethane (15 ml) has been added into the second syringe. The direct emulsion has been obtained by successive back and forth passages through the connecting tubing. The passage rate to generate the emulsion was settled at 10-round trip per minute and the emulsification time was settled at 80 minutes. After emulsification process, the emulsion was removed from the syringes and poured into a PTFE cylindrical mold (diameter of 45 mm, height of 15 mm) pinched between two Teflon plates.

### Steps ii') and iii)

The mold has been placed in an oven (Thermo Scientific Heraeus Vacutherm VT6060) heated at 80°C for 24 h in order to allow epichlorhydrin to react with the lignin and hemicellulose.

Crosslinking occurs by the chemical reaction between the alcohol moieties found in lignin and/or hemicellulose with the chlorine and oxirane functions of epichlorhydrin, creating thus glycerol bridges between oligomers.

### Steps iii-1) and iii-2)

After crosslinking, the monolith was washed in a Soxhlet apparatus two days with isopropanol and one day with diethyl ether before being dried 2 days at 85 °C under vacuum. The non carbonized solid washed and dried has been labelled **KBL monolith.**

### Step iv)

Approximately 200 mg of the solid obtained in step iii-2) has been carbonized in a tubular alumina oven to obtain a porous monolithic carbonaceous material as defined in the first or second object of the present invention. In particular, the solid obtained in step iii-2) has been degassed under an Argon flux (0.3 l.min⁻¹) for 30 minutes, then, (still under the Ar flux) the temperature has been increased to 900°C with a heating rate of 5°C.min⁻¹ along with plateaus at 300°C, 600°C and 900°C for 1 h each. Cooldown is uncontrolled and governed by the oven inertia. The carbonized solid obtained has been labelled **unwashed carbo(HIPE).**

### Step v)

The carbonized solid was washed thoroughly in deionized water for 24 hours and then dried in a dryer at 80°C overnight. The carbonized solid washed and dried has been labelled **carbo(HIPE).**

The morphologies of the solid before step iv) and after step v) have been first characterized at the macroscopic length scale both by SEM and Hg porosimetry.

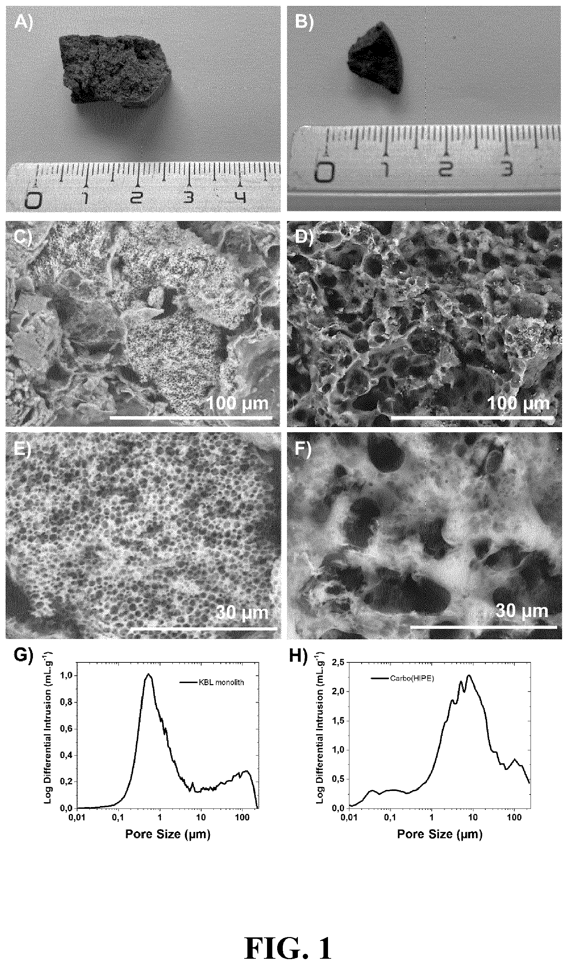

Figure 1 represents a brown-greenish solid **KBL monolith** obtained before step iv) (i.e. after step iii-2)) (figure 1-A); and a black solid **carbo(HIPE)** obtained after step v) (figure 1-B). Both materials depict open cellular structures. The process of the invention leads to porous materials bearing typical macroscopic voids. Moreover, the polydispersity of the macroscopic voids seems to be qualitatively narrow (Fig. 1-C and 1-E). More quantitatively, the connecting windows between macroscopic cells are well represented through a Gaussian-type distribution, centred on 0.4 µm. (Figure 1-G). Beyond windows diameters distribution, Mercury Intrusion Porosimetry (MIP) quantified the brown-greenish solid **KBL monolith** obtained before step iv) (i.e. after step iii-2)) (figure 1-A) with a 60 % porosity along with an apparent skeletal density of 1.34 g.ml⁻¹.

The carbonization keeps the open cellular morphology of the porosity, albeit with larger pores in presence (figures 1-D and 1-F), but still though an open porosity. This increase in pore size is confirmed by MIP with the Gaussian type curve centred toward 6 µm (figure 1-H). Additionally, the carbonization process, reveals a porosity between 10 nm towards 0.1 µm (i.e. including mesopores), feature not present before this step. MIP experiments also gives the **carbo(HIPE)** porosity, with a 71 % value, along with an apparent skeletal density of 0.67 g.ml⁻¹.

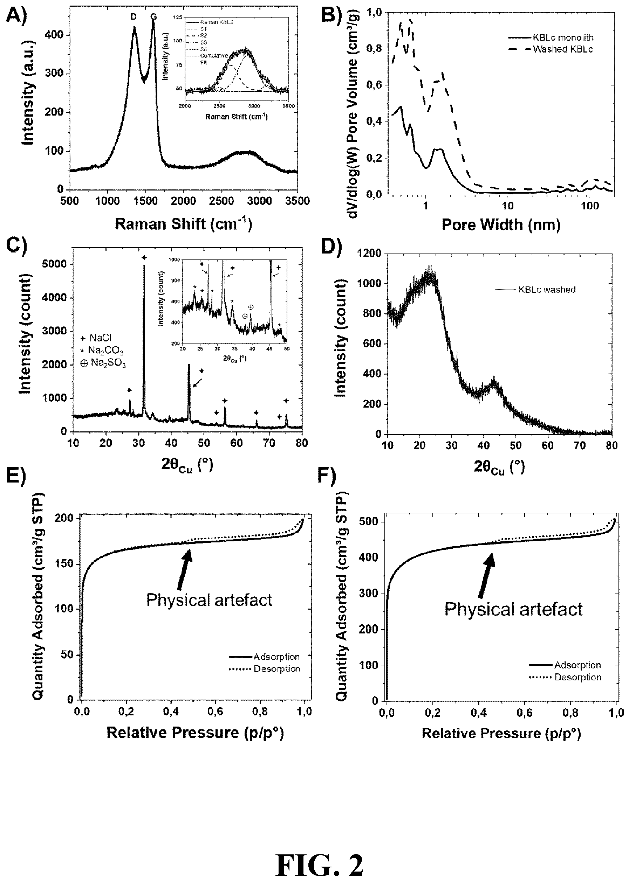

Figure 2 represents Raman spectroscopy of **unwashed carbo(HIPE)** (figure 2-A) with insert: close-up of the 2000-3500 cm⁻¹ region; pore sizes distribution obtained through DFT analysis of **KBL monolith** (curve with solid line) and of **carbo(HIPE)** (curve with dashed line) (figure 2-B); XRD diffractograms of **unwashed carbo(HIPE)** (figure 2-C with + = sodium chloride, ★ = sodium carbonate and ⊕ = sodium sulphite highlighted) with insert: close-up of the 20-50 2θ region and of **carbo(HIPE)** (figure 2-D); and nitrogen adsorption and desorption profiles of the **unwashed carbo(HIPE)** (figure 2-E) and of the **carbo(HIPE)** (figure 2-F).

In figure 2-A, two main bands can be observed in the 1000-1750 cm⁻¹ region. First, a band centred at 1337 cm⁻¹ that corresponds to disordered sp² carbon, so-called D-band. Then, another band centred at 1584 cm⁻¹ is observed which corresponds to two dimensional in-plane motion of strongly coupled sp² carbons (i.e. E_{2g} symmetry) in the honeycomb network of graphite lattice, so-called G-band. The D-band width is of 273 cm⁻¹ while the G-band width is of 106 cm⁻¹. These data show that microscopic defects are present with few graphitic domains. The disorder parameter, *I_{D}*/(*I_{D}*+*I_{G}*)*,* with *I_{D}* the intensity of the D-band and *I_{G}* the intensity of the G-band respectively, is of 48,9%, indicating a disordered material. Another region in the spectrum to be considered is the 2500-3250 cm⁻¹ wavelengths, where the S1-, S2-, S3- & S4-bands (at c.2500; 2660; 2900 & 3180 cm⁻¹, respectively) are present. These vibration modes are not well pronounced nor shaped, which corroborates a highly disordered material obtained while enhancing the graphitization kinetic.

XRD diffractograms (figure 2-C) demonstrates the presence of high amount of salts (NaCl, especially but also Na₂CO₃ and Na₂SO₃) within the **unwashed carbo(HIPE).** Indeed, these alkaline salts are originally presents in the KBL suspension. In first hand, their presence in the industrial lignin can enhance the properties of the carbonized materials, as NaCl and sodium carbonate since they promote graphitization of biomass-based carbon materials during pyrolysis. On the other hand , the salt remaining presence can disrupt reaching high specific surface area as addressing intrinsic higher apparent and skeleton densities (specific surface are being expressed in m²/g) and locking accessibility towards the micro- and mesoscopic voids.

XRD diffractograms (figure 2-D) exhibit no traces of the salts anymore within the **carbo(HIPE),** signifying the washing step efficiency, while the weight loss is estimate at 60 wt%. Two broad diffraction peaks can be observed. The first one at 2θ ranges of 15-25 is attributed to the (002) reflection of graphitic carbon. The weaker diffraction peak at 35-45 (2θ) is attributed to the (101) crystal planes, corresponding to the *a* axis of the graphite structure. Both peaks broadness is indicating the existence of distorted graphite-types units.

Nitrogen adsorption has been performed on the **unwashed carbo(HIPE)** (figure 2-E). A physical artefact during desorption occurred (around p/p° = 0.5), due to adsorbed nitrogen condensation within the carbonaceous materials microporosity. Indeed, this artefact is typical of activated carbon, giving the isotherm this specific profile found elsewhere in the literature specifically for carbonaceous materials containing micropores. Thereby the observed hysteresis loop between the adsorption and desorption curves cannot be interpreted solely with a presence of mesoporosity. The specific area obtained for the **unwashed carbo(HIPE)** is 640 m².g⁻¹, for a volume fraction of the dispersed phase established as 54%.

Considering the nitrogen adsorption on the **carbo(HIPE),** as shown with figure 2-F, the profile obtained is the same, depicting the physical artefact typical of carbon material presents as well. After analyses, the surface is measured to be 1550 m².g⁻¹, more than twice of the one of the **unwashed carbo(HIPE)** before washing.

DFT calculations extrapolated from the nitrogen sorption curves indicate the presence of micropores (i.e. pores that does not excess 2.0 nm) or small mesopores (pores between 2.0 and 50 nm) with different peaks below 2 nm (figure 2-B). The mesopores offered by the **unwashed carbo(HIPE) and carbo(HIPE)** foams are small, falling at the upper limit of the micropores, being contained between 2.0 and 5.0 nm. Carbon materials exhibiting such microporous fixtures are special of interest for different applications, such as as electrodes in supercapacitors.

Moreover, as with the specific area, the washing-step allows an increase in the pores volumes, implying the removal of the salts to gain new spaces. This new pores volume increases the presence of pores below 1 nm.

### Example 2: use of the porous monolithic carbonaceous material as an electrode

An electrode was prepared by mixing in a mortar the **carbo(HIPE)** with carbon black and PTFE in a weight ratio of 80/15/5. Once the mixture becomes self-supported, this latter is manually rolled to decrease its thickness and disks of 16 mm diameter are cut. Then, this electrode was pressed at 5 bars during one minute on a nickel foam. The mass loading of each electrode is fixed at 5 mg.cm⁻². Electrochemical measurements were carried out at 25°C in a 3-electrode system with reference and counter electrodes being a Hg/HgO electrode (1M NaOH) and a platinum wire respectively. The electrolyte was an alkaline solution of 5M KOH.

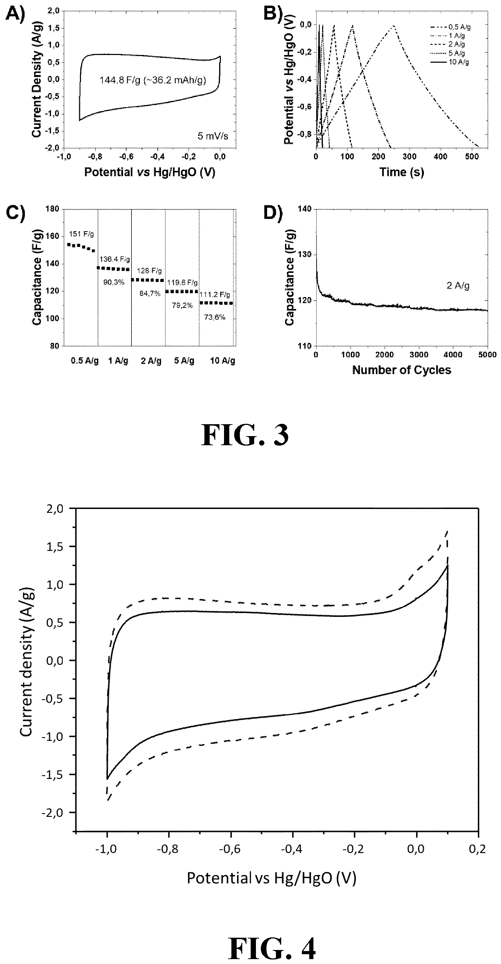

At first, conductivity experiments have been performed using a laboratory-made resistivity experimental device. Conductivity is extracted from resistivity (σ = 1/R ^{∗} L/S) and is evaluated at 30 S.m⁻¹. This value is better than carbon xerogels reported in the literature but lower than commercial carbon black, namely Vulcan XC-72R. The **carbo(HIPE)** monolith electrochemical properties were assessed under cyclic voltammetry and galvanostatic charges/discharges employing 5M KOH aqueous electrolyte. The carbon material voltammogram (figure 3-A) exhibits a rectangular-like shape suggesting both a good electronic conductivity in the aqueous electrolyte and a capacitive behaviour. Moreover, the galvanostatic charge/discharge curves, illustrated with figure 3-B, reveal no shape modification when the current density increases from 0.5 A/g to 10 A/g, where the typical triangular signature of capacitive materials remains.

Moreover, as shown on the figure 3-C, which displays the capacity retention of electrodes cycled in 5M KOH between -0.9 V and 0 V vs Hg/HgO, the evolution of the capacitance when the current density increases from 0.5 to 10 A/g (full charge in ∼10s), clearly demonstrates the high capacity retention, addressing a retention value higher than 70% (151 F/g at 0.5 A/g versus 111.2 F/g at 10 A/g).

Finally, except for the first twenty cycles with a capacitance drop of 10 F/g, the capacitance of the carbon material obtained from carbo(HIPE) remains stable over 5000 cycles at 2 A/g, depicting a final capacity of 118 F/g, as illustrated in figure 3-D. In comparison, a commercial activated carbon from Kuraray YP80F, which derived from coconut fibers, has been tested in the same conditions (data not shown) and exhibits similar performance to the carbo(HIPE) electrode in 5M KOH. For instance, at 5 mV/s, the calculated capacitance for YP80F is 164.4 F/g and 144.8 F/g for the **carbo(HIPE).** These electrochemical results clearly demonstrate that it is possible to employ the material of the invention as an electrode toward electrical double-layer capacitors under outstanding remnant returned capacity while cycling.

### Example 3: use of the porous monolithic carbonaceous material as an electrode

An electrode was prepared by mixing in a mortar the **carbo(HIPE)** with PTFE in a weight ratio of 95/5. Once the mixture becomes self-supported, this latter is manually rolled to decrease its thickness and disks of 16 mm diameter are cut. Then, this electrode was pressed at 5 bars during one minute on a nickel foam. The mass loading of each electrode is fixed at 5 mg.cm⁻². Electrochemical measurements were carried out at 25°C in a 3-electrode system with reference and counter electrodes being a Hg/HgO electrode (1M NaOH) and a platinum wire respectively. The electrolyte was an alkaline solution of 5M KOH.

At first, conductivity experiments have been performed using a laboratory-made resistivity experimental device. Conductivity is extracted from resistivity (σ = 1/R * L/S) and is evaluated at 30 S.m⁻¹. The **carbo(HIPE)** monolith electrochemical properties were assessed under cyclic voltammetry and galvanostatic charges/discharges employing 5M KOH aqueous electrolyte. The carbon material voltammogram (figure 4, curve with dashed line) exhibits a rectangular-like shape suggesting both a good electronic conductivity in the aqueous electrolyte and a capacitive behaviour. For a comparison, the electrode prepared in example 2 is also represented in figure 4 (curve with solid line).

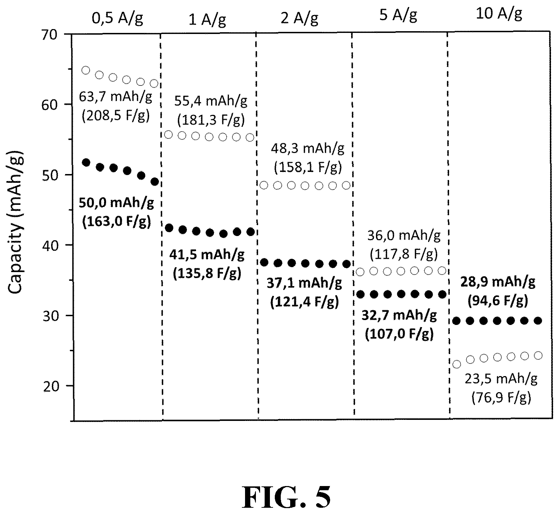

Moreover, as shown on the figure 5, which displays the capacity retention of electrodes cycled in 5M KOH between -1 V and 0.1 V vs Hg/HgO, the evolution of the capacity when the current density increases from 0.5 to 10 A/g (full charge in ∼10s), clearly demonstrates an acceptable capacity retention addressing a retention value higher than 37% (208.5 F/g at 0.5 A/g versus 77 F/g at 10 A/g) (curves with empty circles). For a comparison, the electrode prepared in example 2 is also represented in figure 5 (curves with solid circles).

## Claims

1. A process for preparing a porous material porous monolithic carbonaceous material, wherein said process comprises at least the following steps:
i) preparing an hydrophilic alkaline phase comprising at least one polymerizable monomer, oligomer, or prepolymer from industrial lignin, at least one surfactant, and at least one crosslinking agent,
ii) contacting and mixing said hydrophilic alkaline phase with an hydrophobic oily phase comprising at least one organic solvent or at least one oil, so as to form an emulsion,
iii) polymerizing the emulsion so as to form a solid,
iv) carbonizing the solid by submitting the solid obtained in step iii) to a heating step from an initial temperature Tᵢ to a final temperature Tf,
wherein the initial temperature Tᵢ ranges from 15°C to 30°C, the final temperature Tf is greater than or equal to 850°C, and said heating step is **characterized by**:
* a heating rate greater than 1°C/min,
* a first plateau at a temperature T_{P1} ranging from 250 to 350°C,
* a second plateau at a temperature T_{P2} ranging from 550 to 750°C, and
* a third plateau at the final temperature Tf,
wherein each plateau is carried out during less than 120 min, and
v) washing the carbonized solid.

2. The process according to claim 1, wherein the polymerizable monomer, oligomer, or prepolymer from industrial lignin is provided in the hydrophilic alkaline phase as a solution comprising said polymerizable monomer, oligomer, or prepolymer from industrial lignin, said solution being a cooking liquor, and preferably a black liquor.

3. The process according to claim 2, wherein the hydrophilic alkaline phase comprises from 40 to 60% by weight of said solution comprising said polymerizable monomer, oligomer, or prepolymer with respect to the total weight of the hydrophilic alkaline phase.

4. The process according to any one of the preceding claims, wherein the hydrophilic alkaline phase comprises from 1 to 10% by weight of said surfactant with respect to the total weight of the hydrophilic alkaline phase.

5. The process according to any one of the preceding claims, wherein the hydrophilic alkaline phase preferably comprises from 5 to 15% by weight of said crosslinking agent with respect to the total weight of the hydrophilic alkaline phase.

6. The process according to any one of the preceding claims, wherein the contacting and mixing step ii) is such that a volume Vₒ of the hydrophobic oily phase is contacted and mixed with a volume Vₐ of the hydrophilic alkaline phase so as to form an emulsion having a volume Vₑ = Vₐ + Vₒ, with Vₒ being greater than Vₐ.

7. The process according to any one of the preceding claims, wherein the heating step iv) has a heating rate greater than 2°C/min.

8. The process according to any one of the preceding claims, wherein the second plateau has a temperature T_{P2} ranging from 575 to 675°C.

9. A porous monolithic carbonaceous material, wherein said porous monolithic carbonaceous material is obtained according to a process as defined in any one of the preceding claims, it is an essentially microporous material comprising micropores, mesopores and optionally macropores, and it displays a disorder paramater *I_{D}*/(*I_{D}*+*I_{G}*)*,* with *I_{D}* being the intensity of the D-band and *I_{G}* being the intensity of the G-band respectively, less than or equal to 50.0%, where the intensities of the G-band and the D-band are measured on a Raman spectrum and the D-band corresponds to a first main band centred at 1337 cm⁻¹, and the G-band corresponds to a second main band centred at 1584 cm⁻¹.

10. The porous monolithic carbonaceous material according to claim 9, wherein it has a specific surface area ranging from 1200 to 1900 m²/g.

11. The porous monolithic carbonaceous material according to claim 9 or 10, wherein it displays an electrical conductivity ranging from 20 to 40 S.m⁻¹.

12. Use of a porous monolithic carbonaceous material as defined in any one of claims 9 to 11 or obtained according to a process as defined in any one of claims 1 to 8, as an electrode of an electrochemical device such as a supercapacitor.

13. Electrode for use in an electrochemical device, preferably a supercapacitor, wherein it comprises a porous monolithic carbonaceous material as defined in any one of claims 9 to 11 or obtained according to a process as defined in any one of claims 1 to 8.

14. Electrode according to claim 13, wherein it further comprises an agent generating electron conductivity.

15. Supercapacitor comprising a first electrode and a second electrode, said first and second electrodes being separated from each other by means of a separator impregnated with a liquid electrolyte comprising at least one alkaline salt in solution in at least one solvent, wherein at least one of the first and second electrodes is an electrode as defined in claim 13 or 14.
